(19)

**Europäisches Patentamt**
**European Patent Office**
**Office européen des brevets**

(11) **EP 3 820 945 B1**

(12) **EUROPEAN PATENT SPECIFICATION**

(45) Date of publication and mention
of the grant of the patent:
**01.03.2023 Bulletin 2023/09**

(21) Application number: **19739285.5**

(22) Date of filing: **12.07.2019**

(51) International Patent Classification (IPC):
**C09C 1/02** *(2006.01)*

(52) Cooperative Patent Classification (CPC):
**C09C 1/021;** C01P 2004/61; C01P 2006/12

(86) International application number:
**PCT/EP2019/068835**

(87) International publication number:
**WO 2020/011983 (16.01.2020 Gazette 2020/03)**

(54) **SURFACE-REACTED CALCIUM CARBONATE FOR STABILIZING MINT OIL**

OBERFLÄCHENREAGIERTES CALCIUMKARBONAT ZUR STABILISIERUNG VON MINZÖL

CARBONATE DE CALCIUM TRAITÉ PAR RÉACTION EN SURFACE POUR STABILISER L'HUILE DE MENTHE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **13.07.2018 EP 18183346**

(43) Date of publication of application:
**19.05.2021 Bulletin 2021/20**

(73) Proprietor: **Omya International AG**
**4665 Oftringen (CH)**

(72) Inventors:
• **SHARMA, Lalit**
**4800 Zofingen (CH)**
• **BUDDE, Tanja**
**4805 Brittnau (CH)**

(74) Representative: **Maiwald GmbH**
**Elisenhof**
**Elisenstraße 3**
**80335 München (DE)**

(56) References cited:
**WO-A1-2014/057038      WO-A1-2017/093437**
**US-A- 4 440 790**

**Description**

The present invention refers to a surface-reacted calcium carbonate having a volume median particle size $d_{50}$ from 0.1 to 90 $\mu$m, wherein mint oil is adsorbed onto and/or absorbed into the surface of the surface-reacted calcium carbonate as well as the use of such a surface-reacted calcium carbonate for stabilizing mint oil.

Mint oils such as mint oil, spearmint oil and peppermint oil have several benefits such as refreshing and cooling effects, antimicrobial effects, flavoring properties and promoting digestive balance. Thus, mint oils find wide applications in the manufacturing of soap, shampoo, skin care products, pharmaceutical products, cigarettes, toothpaste, disinfectants, bug repellants, food poducts, drinks, and the like.

However, mint oils have the tendency to alterations and thus show a reduced stability over time. For example, several components typically found in mint oils feature very low boiling points resulting in a removal of the corresponding components from the oil when stored at e.g. room temperature. Furthermore, such oils contain reactive components which may react with each other or may undergo chemical conversion producing undesirable flavors in the oil and an alteration of the composition. WO2014057038 A1 refers to a fast disintegrating dosage form comprising functionalized natural and/or synthetic calcium carbonate, at least one active ingredient and at least one disintegrant, wherein said functionalized natural or synthetic calcium carbonate is a reaction product of natural or synthetic calcium carbonate with carbon dioxide and one or more acids, wherein the carbon dioxide is formed in situ by the acid treatment and/or is supplied from an external source, and wherein the tablet disintegrates in less than or in 3 minutes, preferably in less than or in 2 minutes, more preferably in less than or in 1 minute, still more preferably in less than or in 30 seconds, when introduced into an aqueous environment. WO2017093437 A1 relates to a method for the production of granules comprising surface-reacted calcium carbonate. US4440790 refers to a process for preparing a peppermint oil containing a reduced menthofuran content, which comprises reacting the peppermint oil with about 0.5% to about 15% by weight maleic anhydride, based on the weight of peppermint oil to selective form a menthofuran-maleic anhydride adduct without otherwise affecting the flavoring agent properties of the remaining pepper-mint oil constituents and recovering the peppermint oil having a reduced menthofuran content.

In view of the foregoing, there is still a need in the art for an improved stabilization of mint oils, especially against alterations in the composition caused by chemical conversion.

Accordingly, an objective of the present invention may be seen in the provision of an agent for stabilizing mint oil, especially stabilizing mint oil against chemical conversion. Furthermore, it is desirable that the agent for stabilizing mint oil is easily available, non-toxic and can be used in a great variety of applications.

One or more of the foregoing objectives is/are solved by the present invention.

According to one aspect of the present invention, a surface-reacted calcium carbonate having a volume median particle size $d_{50}$ from 0.1 to 90 $\mu$m, wherein mint oil is adsorbed onto and/or absorbed into the surface of the surface-reacted calcium carbonate is provided, wherein the surface-reacted calcium carbonate is a reaction product of natural ground calcium carbonate or precipitated calcium carbonate with carbon dioxide and one or more $H_3O^+$ ion donors, wherein the carbon dioxide is formed in situ by the $H_3O^+$ ion donors treatment and/or is supplied from an external source, wherein the surface-reacted calcium carbonate has a specific surface area of from 15 m$^2$/g to 200 m$^2$/g, measured using nitrogen and the BET method, and an intra-particle intruded specific pore volume in the range of from 0.1 to 2.3 cm$^3$/g calculated from mercury porosimetry measurement.

Advantageous embodiments are defined in the corresponding sub-claims.

According to one embodiment, the surface-reacted calcium carbonate has a volume median particle size $d_{50}$ from 0.5 to 50 $\mu$m, preferably from 1 to 40 $\mu$m, more preferably from 1.2 to 30 $\mu$m, and most preferably from 1.5 to 15 $\mu$m.

According to another embodiment, the surface-reacted calcium carbonate has a specific surface area of from 20 m$^2$/g to 180 m$^2$/g, and more preferably from 25 m$^2$/g to 160 m$^2$/g, measured using nitrogen and the BET method.

According to yet another embodiment, the natural ground calcium carbonate is selected from the group consisting of marble, chalk, limestone, and mixtures thereof, or the precipitated calcium carbonate is selected from the group consisting of precipitated calcium carbonates having an aragonitic, vateritic or calcitic crystal form, and mixtures thereof.

According to one embodiment, the at least one $H_3O^+$ ion donor is selected from the group consisting of hydrochloric acid, sulphuric acid, sulphurous acid, phosphoric acid, citric acid, oxalic acid, an acidic salt, acetic acid, formic acid, and mixtures thereof, preferably the at least one $H_3O^+$ ion donor is selected from the group consisting of hydrochloric acid, sulphuric acid, sulphurous acid, phosphoric acid, oxalic acid, $H_2PO_4^-$, being at least partially neutralised by a cation selected from Li$^+$, Na$^+$ and/or K$^+$, HPO$_4^{2-}$, being at least partially neutralised by a cation selected from Li$^+$, Na$^+$, K$^+$, Mg$^{2+}$, and/or Ca$^{2+}$, and mixtures thereof, more preferably the at least one $H_3O^+$ ion donor is selected from the group consisting of hydrochloric acid, sulphuric acid, sulphurous acid, phosphoric acid, oxalic acid, or mixtures thereof, and most preferably, the at least one $H_3O^+$ ion donor is phosphoric acid.

According to another embodiment, the surface-reacted calcium carbonate is in form of a powder.

According to yet another embodiment, the surface-reacted calcium carbonate is in form of granules, preferably granules having a volume median particle size of from 0.1 to 6 mm, preferably 0.2 to 5 mm, more preferably from 0.3 to 4 mm, especially preferably from 0.3 to 0.6 mm or 1 mm to 4 mm, most preferably from 0.6 to 1 mm or 1 to 2 mm determined by sieve fractioning.

According to one embodiment, the mint oil comprises two or more compounds selected from the group comprising menthol, isomenthone, menthone, limonene, menthylacetate, β-pinene, α-pinene, α-terpineol, isopulegol, terpinen-4-ol, neoisopulegol, pulegone, piperitone and caryophyllene.

According to another embodiment, the mint oil is selected from mint oil, spearmint oil, peppermint oil and mixture thereof.

According to another aspect, the use of a surface-reacted calcium carbonate as defined herein for stabilizing mint oil is provided, wherein at least one compound of the mint oil is stabilized against chemical conversion and/or the stabilization of the mint oil relates to a recovery rate of same within 93 days of $\geq 96.0$ wt.-%, as determined by GC-MS after storing the surface-reacted calcium carbonate at room temperature.

According to one embodiment, at least one compound of the mint oil is stabilized against chemical conversion.

According to another embodiment, the at least one compound is selected from β-pinene, α-pinene, limonene, isopulegol, neoisopulegol, pulegone and mixtures thereof.

According to yet another embodiment, the stabilization of the mint oil relates to a recovery rate of same within 93 days, preferably 93 days, of $\geq 97.0$ wt.-%, even more preferably $\geq 98.0$ wt.-%, and most preferably $\geq 99.0$ wt.-%, as determined by GC-MS after storing the surface-reacted calcium carbonate at room temperature.

According to one embodiment, the stabilization of the mint oil relates to a recovery rate of same within 30 days, preferably 30 days, of $\geq 99.0$ wt.-%, preferably $\geq 99.5$ wt.-%, as determined by GC-MS after storing the surface-reacted calcium carbonate at room temperature.

According to another embodiment, the stabilization of the mint oil relates to a recovery rate of same within 93 days, preferably 93 days, of $\geq 90.0$ wt.-%, preferably $\geq 92.0$ wt.-%, even more preferably $\geq 94.0$ wt.-%, and most preferably $\geq 96.0$ wt.-%, as determined by GC-MS after storing the surface-reacted calcium carbonate at a temperature of 40°C ($\pm$ 2°C).

According to yet another embodiment, the stabilization of the mint oil relates to a recovery rate of same within 30 days, preferably 30 days, of $\geq 94.0$ wt.-%, preferably $\geq 98.0$ wt.-%, as determined by GC-MS after storing the surface-reacted calcium carbonate at a temperature of 40°C ($\pm$ 2°C).

It should be understood that for the purposes of the present invention, the following terms have the following meanings:

"Natural ground calcium carbonate" (GCC) in the meaning of the present invention is a calcium carbonate obtained from natural sources, such as limestone, marble, or chalk, and processed through a wet and/or dry treatment such as grinding, screening and/or fractionating, for example, by a cyclone or classifier.

"Precipitated calcium carbonate" (PCC) in the meaning of the present invention is a synthesised material, obtained by precipitation following reaction of carbon dioxide and lime in an aqueous, semi-dry or humid environment or by precipitation of a calcium and carbonate ion source in water. PCC may be in the vateritic, calcitic or aragonitic crystal form. PCCs are described, for example, in EP 2 447 213 A1, EP 2 524 898 A1, EP 2 371 766 A1, EP 1 712 597 A1, EP 1 712 523 A1, or WO 2013/142473 A1.

The term "surface-reacted" in the meaning of the present application shall be used to indicate that a material has been subjected to a process comprising partial dissolution of said material upon treatment with an $H_3O^+$ ion donor (e.g., by use of water-soluble free acids and/or acidic salts) in aqueous environment followed by a crystallization process which may occur in the absence or presence of further crystallization additives.

An "$H_3O^+$ ion donor" in the context of the present invention is a Bronsted acid and/or an acid salt, i.e. a salt containing an acidic hydrogen.

The term "acid" as used herein refers to an acid in the meaning of the definition by Bronsted and Lowry (e.g., $H_2SO_4$, $HSO_4^-$).

The term "free acid" refers only to those acids being in the fully protonated form (e.g., $H_2SO_4$).

The "particle size" of particulate materials other than surface-reacted calcium carbonate herein is described by its distribution of particle sizes $d_x$. Therein, the value $d_x$ represents the diameter relative to which x % by weight of the particles have diameters less than $d_x$. This means that, for example, the $d_{20}$ value is the particle size at which 20 wt.-% of all particles are smaller than that particle size. The $d_{50}$ value is thus the weight median particle size, i.e. 50 wt.-% of all particles are smaller than this particle size. For the purpose of the present invention, the particle size is specified as weight median particle size $d_{50}$(wt.) unless indicated otherwise. Particle sizes were determined by using a Sedigraph™ 5100 instrument or Sedigraph™ 5120 instrument of Micromeritics Instrument Corporation. The method and the instrument are known to the skilled person and are commonly used to determine the particle size of fillers and pigments. The measurements were carried out in an aqueous solution of 0.1 wt.-% $Na_4P_2O_7$.

The "particle size" of surface-reacted calcium carbonate herein is described as volume-based particle size distribution. Volume median particle size $d_{50}$ was evaluated using a Malvern Mastersizer 2000 Laser Diffraction System. The $d_{50}$ or $d_{98}$ value, measured using a Malvern Mastersizer 2000 Laser Diffraction System, indicates a diameter value such that 50 % or 98 % by volume, respectively, of the particles have a diameter of less than this value. The raw data obtained by the measurement are analysed using the Mie theory, with a particle refractive index of 1.57 and an absorption index of 0.005.

The term "particulate" in the meaning of the present application refers to materials composed of a plurality of particles. Said plurality of particles may be defined, for example, by its particle size distribution. The expression "particulate material" may comprise granules, powders, grains, tablets, or crumbles.

The "specific surface area" (expressed in $m^2/g$) of a material as used throughout the present document can be determined by the Brunauer Emmett Teller (BET) method with nitrogen as adsorbing gas and by use of a ASAP 2460 instrument from Micromeritics. The method is well known to the skilled person and defined in ISO 9277:2010. Samples are conditioned at 100 °C under vacuum for a period of 30 min prior to measurement. The total surface area (in $m^2$) of said material can be obtained by multiplication of the specific surface area (in $m^2/g$) and the mass (in g) of the material.

In the context of the present invention, the term "pore" is to be understood as describing the space that is found between and/or within particles, i.e. that is formed by the particles as they pack together under nearest neighbour contact (interparticle pores), such as in a powder or a compact and/or the void space within porous particles (intraparticle pores), and that allows the passage of liquids under pressure when saturated by the liquid and/or supports absorption of surface wetting liquids.

Unless specified otherwise, the term "drying" refers to a process according to which at least a portion of water is removed from a material to be dried such that a constant weight of the obtained "dried" material at 120 °C is reached. Moreover, a "dried" or "dry" material may be defined by its total moisture content which, unless specified otherwise, is less than or equal to 1.0 wt.-%, preferably less than or equal to 0.5 wt.-%, more preferably less than or equal to 0.2 wt.-%, and most preferably between 0.03 and 0.07 wt.-%, based on the total weight of the dried material.

For the purpose of the present application, "water-insoluble" materials are defined as those which, when mixed with 100 ml of deionised water and filtered at 20°C to recover the liquid filtrate, provide less than or equal to 0.1 g of recovered solid material following evaporation at 95 to 100°C of 100 g of said liquid filtrate. "Water-soluble" materials are defined as materials leading to the recovery of greater than 0.1 g of solid material following evaporation at 95 to 100°C of 100 g of said liquid filtrate. In order to assess whether a material is an insoluble or soluble material in the meaning of the present invention, the sample size is greater than 0.1 g, preferably 0.5 g or more.

A "suspension" or "slurry" in the meaning of the present invention comprises undissolved solids and water, and optionally further additives, and usually contains large amounts of solids and, thus, is more viscous and can be of higher density than the liquid from which it is formed.

Where an indefinite or definite article is used when referring to a singular noun, e.g., "a", "an" or "the", this includes a plural of that noun unless anything else is specifically stated.

Where the term "comprising" is used in the present description and claims, it does not exclude other elements. For the purposes of the present invention, the term "consisting of" is considered to be a preferred embodiment of the term "comprising". If hereinafter a group is defined to comprise at least a certain number of embodiments, this is also to be understood to disclose a group, which preferably consists only of these embodiments.

Terms like "obtainable" or "definable" and "obtained" or "defined" are used interchangeably. This, for example, means that, unless the context clearly dictates otherwise, the term "obtained" does not mean to indicate that, for example, an embodiment must be obtained by, for example, the sequence of steps following the term "obtained" though such a limited understanding is always included by the terms "obtained" or "defined" as a preferred embodiment.

Whenever the terms "including" or "having" are used, these terms are meant to be equivalent to "comprising" as defined hereinabove.

In the following preferred embodiments of the inventive composition will be set out in more detail.

The present invention refers to a surface-reacted calcium carbonate having a volume median particle size $d_{50}$ from 0.1 to 90 $\mu$m, wherein mint oil is adsorbed onto and/or absorbed into the surface of the surface-reacted calcium carbonate, wherein the surface-reacted calcium carbonate is a reaction product of natural ground calcium carbonate or precipitated calcium carbonate with carbon dioxide and one or more $H_3O^+$ ion donors, wherein the carbon dioxide is formed in situ by the $H_3O^+$ ion donors treatment and/or is supplied from an external source.

In a preferred embodiment of the invention the surface-reacted calcium carbonate is obtained by a process comprising the steps of: (a) providing a suspension of natural or precipitated calcium carbonate, (b) adding at least one acid having a $pK_a$ value of 0 or less at 20°C or having a $pK_a$ value from 0 to 2.5 at 20°C to the suspension of step a), and (c) treating the suspension of step (a) with carbon dioxide before, during or after step (b). According to another embodiment the surface-reacted calcium carbonate is obtained by a process comprising the steps of: (A) providing a natural or precipitated calcium carbonate, (B) providing at least one water-soluble acid, (C) providing gaseous $CO_2$, (D) contacting said natural or precipitated calcium carbonate of step (A) with the at least one acid of step (B) and with the $CO_2$ of step (C), characterised in that: (i) the at least one acid of step B) has a $pK_a$ of greater than 2.5 and less than or equal to 7 at 20°C, associated with the ionisation of its first available hydrogen, and a corresponding anion is formed on loss of this first available hydrogen capable of forming a water-soluble calcium salt, and (ii) following contacting the at least one acid with natural or precipitated calcium carbonate, at least one water-soluble salt, which in the case of a hydrogen-containing salt has a $pK_a$ of greater than 7 at 20°C, associated with the ionisation of the first available hydrogen, and the salt anion of which is capable of forming water-insoluble calcium salts, is additionally provided.

"Natural ground calcium carbonate" (GCC) preferably is selected from calcium carbonate containing minerals selected from the group comprising marble, chalk, limestone and mixtures thereof. Natural ground calcium carbonate may comprise further naturally occurring components such as magnesium carbonate, alumino silicate etc.

In general, the grinding of natural ground calcium carbonate may be a dry or wet grinding step and may be carried out with any conventional grinding device, for example, under conditions such that comminution predominantly results from impacts with a secondary body, i.e. in one or more of: a ball mill, a rod mill, a vibrating mill, a roll crusher, a centrifugal impact mill, a vertical bead mill, an attrition mill, a pin mill, a hammer mill, a pulveriser, a shredder, a de-clumper, a knife cutter, or other such equipment known to the skilled man. In case the calcium carbonate containing mineral material comprises a wet ground calcium carbonate containing mineral material, the grinding step may be performed under conditions such that autogenous grinding takes place and/or by horizontal ball milling, and/or other such processes known to the skilled man. The wet processed ground calcium carbonate containing mineral material thus obtained may be washed and dewatered by well-known processes, e.g. by flocculation, filtration or forced evaporation prior to drying. The subsequent step of drying (if necessary) may be carried out in a single step such as spray drying, or in at least two steps. It is also common that such a mineral material undergoes a beneficiation step (such as a flotation, bleaching or magnetic separation step) to remove impurities.

"Precipitated calcium carbonate" (PCC) in the meaning of the present invention is a synthesized material, generally obtained by precipitation following reaction of carbon dioxide and calcium hydroxide in an aqueous environment or by precipitation of calcium and carbonate ions, for example CaCl$_2$ and $Na_2CO_3$, out of solution. Further possible ways of producing PCC are the lime soda process, or the Solvay process in which PCC is a by-product of ammonia production. Precipitated calcium carbonate exists in three primary crystalline forms: calcite, aragonite and vaterite, and there are many different polymorphs (crystal habits) for each of these crystalline forms. Calcite has a trigonal structure with typical crystal habits such as scalenohedral (S-PCC), rhombohedral (R-PCC), hexagonal prismatic, pinacoidal, colloidal (C-PCC), cubic, and prismatic (P-PCC). Aragonite is an orthorhombic structure with typical crystal habits of twinned hexagonal prismatic crystals, as well as a diverse assortment of thin elongated prismatic, curved bladed, steep pyramidal, chisel shaped crystals, branching tree, and coral or worm-like form. Vaterite belongs to the hexagonal crystal system. The obtained PCC slurry can be mechanically dewatered and dried.

According to one embodiment of the present invention, the precipitated calcium carbonate is precipitated calcium carbonate, preferably comprising aragonitic, vateritic or calcitic mineralogical crystal forms or mixtures thereof.

Precipitated calcium carbonate may be ground prior to the treatment with carbon dioxide and at least one $H_3O^+$ ion donor by the same means as used for grinding natural calcium carbonate as described above.

According to one embodiment of the present invention, the natural ground calcium carbonate or precipitated calcium carbonate is in form of particles having a weight median particle size $d_{50}$ of 0.05 to 10.0 $\mu$m, preferably 0.2 to 5.0 $\mu$m, and most preferably 0.4 to 3.0 $\mu$m. According to a further embodiment of the present invention, the natural ground calcium carbonate or precipitated calcium carbonate is in form of particles having a weight top cut particle size $d_{98}$ of 0.15 to 30 $\mu$m, preferably 0.6 to 15 $\mu$m, more preferably 1.2 to 10 $\mu$m, most preferably 1.5 to 4 $\mu$m, especially 1.6 $\mu$m.

The natural ground calcium carbonate and/or precipitated calcium carbonate may be used dry or suspended in water. Preferably, a corresponding slurry has a content of natural ground calcium carbonate or precipitated calcium carbonate within the range of 1 wt.-% to 90 wt.-%, more preferably 3 wt.-% to 60 wt.-%, even more preferably 5 wt.-% to 40 wt.-%, and most preferably 10 wt.-% to 25 wt.-% based on the weight of the slurry.

The one or more $H_3O^+$ ion donor used for the preparation of surface-reacted calcium carbonate may be any strong acid, medium-strong acid, or weak acid, or mixtures thereof, generating $H_3O^+$ ions under the preparation conditions. According to the present invention, the at least one $H_3O^+$ ion donor can also be an acid salt, generating $H_3O^+$ ions under the preparation conditions.

According to one embodiment, the at least one $H_3O^+$ ion donor is a strong acid having a $pK_a$ of 0 or less at 20°C.

According to another embodiment, the at least one $H_3O^+$ ion donor is a medium-strong acid having a $pK_a$ value from 0 to 2.5 at 20°C. If the $pK_a$ at 20°C is 0 or less, the acid is preferably selected from sulphuric acid, hydrochloric acid, or mixtures thereof. If the $pK_a$ at 20°C is from 0 to 2.5, the $H_3O^+$ ion donor is preferably selected from $H_2SO_3$, $H_3PO_4$, oxalic acid, or mixtures thereof. The at least one $H_3O^+$ ion donor can also be an acid salt, for example, $HSO_4^-$ or $H_2PO_4^-$, being at least partially neutralized by a corresponding cation such as Li$^+$, Na$^+$ or K$^+$, or $HPO_4^{2-}$, being at least partially neutralised by a corresponding cation such as Li$^+$, Na$^+$, K$^+$, Mg$^{2+}$ or Ca$^{2+}$. The at least one $H_3O^+$ ion donor can also be a mixture of one or more acids and one or more acid salts.

According to still another embodiment, the at least one $H_3O^+$ ion donor is a weak acid having a $pK_a$ value of greater than 2.5 and less than or equal to 7, when measured at 20°C, associated with the ionisation of the first available hydrogen, and having a corresponding anion, which is capable of forming water-soluble calcium salts. Subsequently, at least one water-soluble salt, which in the case of a hydrogen-containing salt has a $pK_a$ of greater than 7, when measured at 20°C, associated with the ionisation of the first available hydrogen, and the salt anion of which is capable of forming water-insoluble calcium salts, is additionally provided. According to the preferred embodiment, the weak acid has a $pK_a$ value from greater than 2.5 to 5 at 20°C, and more preferably the weak acid is selected from the group consisting of acetic acid, formic acid, propanoic acid, and mixtures thereof. Exemplary cations of said water-soluble salt are selected from the group consisting of potassium, sodium, lithium and mixtures thereof. In a more preferred embodiment, said cation is sodium or potassium. Exemplary anions of said water-soluble salt are selected from the group consisting of phosphate, dihydrogen phosphate, monohydrogen phosphate, oxalate, silicate, mixtures thereof and hydrates thereof. In a more preferred embodiment, said anion is selected from the group consisting of phosphate, dihydrogen phosphate, monohydrogen phosphate, mixtures thereof and hydrates thereof. In a most preferred embodiment, said anion is selected from the group consisting of dihydrogen phosphate, monohydrogen phosphate, mixtures thereof and hydrates thereof. Water-soluble salt addition may be performed dropwise or in one step. In the case of drop wise addition, this addition preferably takes place within a time period of 10 minutes. It is more preferred to add said salt in one step.

According to one embodiment of the present invention, the at least one $H_3O^+$ ion donor is selected from the group consisting of hydrochloric acid, sulphuric acid, sulphurous acid, phosphoric acid, citric acid, oxalic acid, an acidic salt, acetic acid, formic acid, and mixtures thereof. Preferably the at least one $H_3O^+$ ion donor is selected from the group consisting of hydrochloric acid, sulphuric acid, sulphurous acid, phosphoric acid, oxalic acid, $H_2PO_4^-$, being at least partially neutralised by a corresponding cation such as $Li^+$, $Na^+$ or $K^+$, $HPO_4^{2-}$, being at least partially neutralised by a corresponding cation such as $Li^+$, $Na^+$, $K^+$, $Mg^{2+}$, or $Ca^{2+}$ and mixtures thereof, more preferably the at least one acid is selected from the group consisting of hydrochloric acid, sulphuric acid, sulphurous acid, phosphoric acid, oxalic acid, or mixtures thereof, and most preferably, the at least one $H_3O^+$ ion donor is phosphoric acid.

The one or more $H_3O^+$ ion donor can be added to the suspension as a concentrated solution or a more diluted solution. Preferably, the molar ratio of the $H_3O^+$ ion donor to the natural or precipitated calcium carbonate is from 0.01 to 4, more preferably from 0.02 to 2, even more preferably 0.05 to 1 and most preferably 0.1 to 0.58.

As an alternative, it is also possible to add the $H_3O^+$ ion donor to the water before the natural or precipitated calcium carbonate is suspended.

In a next step, the natural ground calcium carbonate or precipitated calcium carbonate is treated with carbon dioxide. If a strong acid such as sulphuric acid or hydrochloric acid is used for the $H_3O^+$ ion donor treatment of the natural ground calcium carbonate or precipitated calcium carbonate, the carbon dioxide is automatically formed. Alternatively or additionally, the carbon dioxide can be supplied from an external source.

$H_3O^+$ ion donor treatment and treatment with carbon dioxide can be carried out simultaneously which is the case when a strong or medium-strong acid is used. It is also possible to carry out $H_3O^+$ ion donor treatment first, e.g. with a medium strong acid having a $pK_a$ in the range of 0 to 2.5 at 20°C, wherein carbon dioxide is formed in situ, and thus, the carbon dioxide treatment will automatically be carried out simultaneously with the $H_3O^+$ ion donor treatment, followed by the additional treatment with carbon dioxide supplied from an external source.

Preferably, the concentration of gaseous carbon dioxide in the suspension is, in terms of volume, such that the ratio (volume of suspension):(volume of gaseous $CO_2$) is from 1:0.05 to 1:20, even more preferably 1:0.05 to 1:5.

In a preferred embodiment, the $H_3O^+$ ion donor treatment step and/or the carbon dioxide treatment step are repeated at least once, more preferably several times. According to one embodiment, the at least one $H_3O^+$ ion donor is added over a time period of at least about 5 min, typically from about 5 to about 30 min. Alternatively, the at least one $H_3O^+$ ion donor is added over a time period of about 30 min, preferably about 45 min, and sometimes about 1 h or more.

Subsequent to the $H_3O^+$ ion donor treatment and carbon dioxide treatment, the pH of the aqueous suspension, measured at 20°C, naturally reaches a value of greater than 6.0, preferably greater than 6.5, more preferably greater than 7.0, even more preferably greater than 7.5, thereby preparing the surface-reacted natural or precipitated calcium carbonate as an aqueous suspension having a pH of greater than 6.0, preferably greater than 6.5, more preferably greater than 7.0, even more preferably greater than 7.5.

It is appreciated that the $H_3O^+$ ion donor treatment and treatment with carbon dioxide can be carried over a wide temperature range. Preferably, the $H_3O^+$ ion donor treatment and treatment with carbon dioxide can be carried out at room temperature or elevated temperature. For example, if the $H_3O^+$ ion donor treatment and treatment with carbon dioxide is carried out at elevated temperature, the treatment is preferably in a range from 30 to 90 °C, more preferably from 40 to 80 °C and most preferably from 50 to 80 °C, such as from 60 to 80 °C.

Further details about the preparation of the surface-reacted natural calcium carbonate are disclosed in WO 00/39222 A1, WO 2004/083316 A1, WO 2005/121257 A2, WO 2009/074492 A1, EP 2 264 108 A1, EP 2 264 109 A1 and US 2004/0020410 A1n.

Similarly, surface-reacted precipitated calcium carbonate is obtained. As can be taken in detail from WO 2009/074492 A1, surface-reacted precipitated calcium carbonate is obtained by contacting precipitated calcium carbonate with $H_3O^+$ ions and with anions being solubilized in an aqueous medium and being capable of forming water-insoluble calcium salts, in an aqueous medium to form a slurry of surface-reacted precipitated calcium carbonate, wherein said surface-reacted precipitated calcium carbonate comprises an insoluble, at least partially crystalline calcium salt of said anion formed on the surface of at least part of the precipitated calcium carbonate.

Said solubilized calcium ions correspond to an excess of solubilized calcium ions relative to the solubilized calcium ions naturally generated on dissolution of precipitated calcium carbonate by $H_3O^+$ ions, where said $H_3O^+$ ions are provided solely in the form of a counterion to the anion, i.e. via the addition of the anion in the form of an acid or non-calcium acid salt, and in absence of any further calcium ion or calcium ion generating source.

Said excess solubilized calcium ions are preferably provided by the addition of a soluble neutral or acid calcium salt, or by the addition of an acid or a neutral or acid non-calcium salt which generates a soluble neutral or acid calcium salt in situ.

Said $H_3O^+$ ions may be provided by the addition of an acid or an acid salt of said anion, or the addition of an acid or an acid salt which simultaneously serves to provide all or part of said excess solubilized calcium ions.

In a further preferred embodiment of the preparation of the surface-reacted natural ground calcium carbonate or precipitated calcium carbonate, the natural ground calcium carbonate or precipitated calcium carbonate is reacted with the acid and/or the carbon dioxide in the presence of at least one compound selected from the group consisting of silicate, silica, aluminium hydroxide, earth alkali aluminate such as sodium or potassium aluminate, magnesium oxide, or mixtures thereof. Preferably, the at least one silicate is selected from an aluminium silicate, a calcium silicate, or an earth alkali metal silicate. These components can be added to an aqueous suspension comprising the natural ground calcium carbonate or precipitated calcium carbonate before adding the acid and/or carbon dioxide.

Alternatively, the silicate and/or silica and/or aluminium hydroxide and/or earth alkali aluminate and/or magnesium oxide component(s) can be added to the aqueous suspension of natural or precipitated calcium carbonate while the reaction of natural or precipitated calcium carbonate with an acid and carbon dioxide has already started. Further details about the preparation of the surface-reacted natural or precipitated calcium carbonate in the presence of at least one silicate and/or silica and/or aluminium hydroxide and/or earth alkali aluminate component(s) are disclosed in WO 2004/083316 A1.

The surface-reacted calcium carbonate can be kept in suspension, optionally further stabilised by a dispersant. Conventional dispersants known to the skilled person can be used. A preferred dispersant is comprised of polyacrylic acids and/or carboxymethylcelluloses.

Alternatively, the aqueous suspension described above can be dried, thereby obtaining the solid (i.e. dry or containing as little water that it is not in a fluid form) surface-reacted natural ground calcium carbonate or precipitated calcium carbonate in the form of granules or a powder.

However, the stabilizing of the mint oil is advantageously improved if the surface-reacted calcium carbonate is in form of a powder.

The surface-reacted calcium carbonate may have different particle shapes, such as e.g. the shape of roses, golf balls and/or brains.

The surface-reacted calcium carbonate has a specific surface area of from 15 m²/g to 200 m²/g, preferably from 20 m²/g to 180 m²/g, and most preferably from 25 m²/g to 160 m²/g, measured using nitrogen and the BET method. The BET specific surface area in the meaning of the present invention is defined as the surface area of the particles divided by the mass of the particles. As used therein the specific surface area is measured by adsorption using the BET isotherm (ISO 9277:2010) and is specified in m²/g.

It is a requirement of the present invention that the surface-reacted calcium carbonate has a volume median particle size $d_{50}$ from 0.1 to 90 μm. According to one embodiment the surface-reacted calcium carbonate has a volume median particle size $d_{50}$ from 0.1 to 75 μm, preferably from 0.5 to 50 μm, more preferably from 1 to 40 μm, even more preferably from 1.2 to 30 μm, and most preferably from 1.5 to 15 μm.

Preferably, the surface-reacted calcium carbonate is in form of a powder having a volume median particle size $d_{50}$ from 0.1 to 90 μm, more preferably from 0.1 to 75 μm, even more preferably from 0.5 to 50 μm, still more preferably from 1 to 40 μm, even still more preferably from 1.2 to 30 μm, and most preferably from 1.5 to 15 μm.

It may furthermore be preferred that the surface-reacted calcium carbonate particles have a volume top cut particle size $d_{98}$ of from 2 to 150 μm, preferably from 4 to 100 μm, more preferably 6 to 80 μm, even more preferably from 8 to 60 μm, and most preferably from 8 to 30 μm.

In one embodiment of the present invention, the surface-reacted calcium carbonate as described herein is provided in the form of granules. "Granules" in the meaning of the present invention are agglomerates of the surface-reacted calcium carbonate and have a particle size of 0.1 to 6 mm. That is to say, the granules having a particle size of 0.1 to 6 mm comprise primary particles of the surface-reacted calcium carbonate having a volume median particle size $d_{50}$ from 0.1 to 90 μm, preferably from 0.5 to 50 μm, more preferably from 1 to 40 μm, even more preferably from 1.2 to 30 μm, and most preferably from 1.5 to 15 μm.

For example, the granules preferably have a volume median particle size of from 0.2 to 5 mm, even more preferably from 0.3 to 4 mm, especially preferably from 0.3 to 0.6 mm or 1 mm to 4 mm, most preferably from 0.6 to 1 mm or 1 to 2 mm determined by sieve fractioning, comprise primary particles of the surface-reacted calcium carbonate having a volume median particle size $d_{50}$ from 0.1 to 90 μm, preferably from 0.5 to 50 μm, more preferably from 1 to 40

$\mu$m, even more preferably from 1.2 to 30 $\mu$m, and most preferably from 1.5 to 15 $\mu$m.

If the surface-reacted calcium carbonate is provided in the form of granules, it is appreciated that the granules are first prepared and then the granules are loaded with the mint.

The value $d_x$ represents the diameter relative to which x % of the particles have diameters less than $d_x$. This means that the $d_{98}$ value is the particle size at which 98 % of all particles are smaller. The $d_{98}$ value is also designated as "top cut". The $d_x$ values may be given in volume or weight percent. The $d_{50}$(wt) value is thus the weight median particle size, i.e. 50 wt.-% of all grains are smaller than this particle size, and the $d_{50}$ (vol) value is the volume median particle size, i.e. 50 vol.% of all grains are smaller than this particle size.

Volume median grain diameter $d_{50}$ was evaluated using a Malvern Mastersizer 2000 Laser Diffraction System. The $d_{50}$ or $d_{98}$ value, measured using a Malvern Mastersizer 2000 Laser Diffraction System, indicates a diameter value such that 50 % or 98 % by volume, respectively, of the particles have a diameter of less than this value. The raw data obtained by the measurement are analysed using the Mie theory, with a particle refractive index of 1.57 and an absorption index of 0.005.

The weight median grain diameter is determined by the sedimentation method, which is an analysis of sedimentation behaviour in a gravimetric field. The measurement is made with a Sedigraph™ 5100 or 5120, Micromeritics Instrument Corporation. The method and the instrument are known to the skilled person and are commonly used to determine grain size of fillers and pigments. The measurement is carried out in an aqueous solution of 0.1 wt.-% $Na_4P_2O_7$. The samples were dispersed using a high speed stirrer and sonicated.

The processes and instruments are known to the skilled person and are commonly used to determine grain size of fillers and pigments.

The specific pore volume is measured using a mercury intrusion porosimetry measurement using a Micromeritics Autopore V 9620 mercury porosimeter having a maximum applied pressure of mercury 414 MPa (60 000 psi), equivalent to a Laplace throat diameter of 0.004 $\mu$m (~ nm). The equilibration time used at each pressure step is 20 seconds. The sample material is sealed in a 5 cm$^3$ chamber powder penetrometer for analysis. The data are corrected for mercury compression, penetrometer expansion and sample material compression using the software Pore-Comp (Gane, P.A.C., Kettle, J.P., Matthews, G.P. and Ridgway, C.J., "Void Space Structure of Compressible Polymer Spheres and Consolidated Calcium Carbonate Paper-Coating Formulations", Industrial and Engineering Chemistry Research, 35(5), 1996, p. 1753-1764).

The total pore volume seen in the cumulative intrusion data can be separated into two regions with the intrusion data from 214 $\mu$m down to about 1 - 4 $\mu$m showing the coarse packing of the sample between any agglomerate structures contributing strongly. Below these diameters lies the fine interparticle packing of the particles themselves. If they also have intraparticle pores, then this region appears bi-modal, and by taking the specific pore volume intruded by mercury into pores finer than the modal turning point, i.e. finer than the bi-modal point of inflection, the specific intraparticle pore volume is defined. The sum of these three regions gives the total overall pore volume of the powder, but depends strongly on the original sample compaction/settling of the powder at the coarse pore end of the distribution.

By taking the first derivative of the cumulative intrusion curve the pore size distributions based on equivalent Laplace diameter, inevitably including poreshielding, are revealed. The differential curves clearly show the coarse agglomerate pore structure region, the interparticle pore region and the intraparticle pore region, if present. Knowing the intraparticle pore diameter range it is possible to subtract the remainder interparticle and interagglomerate pore volume from the total pore volume to deliver the desired pore volume of the internal pores alone in terms of the pore volume per unit mass (specific pore volume). The same principle of subtraction, of course, applies for isolating any of the other pore size regions of interest.

The surface-reacted calcium carbonate has an intra-particle intruded specific pore volume in the range from 0.1 to 2.3 cm$^3$/g, more preferably from 0.2 to 2.0 cm$^3$/g, especially preferably from 0.4 to 1.8 cm$^3$/g and most preferably from 0.6 to 1.6 cm$^3$/g, calculated from mercury porosimetry measurement.

The intra-particle pore size of the surface-reacted calcium carbonate preferably is in a range of from 0.004 to 1.6 $\mu$m, more preferably in a range of between 0.005 to 1.3 $\mu$m, especially preferably from 0.006 to 1.15 $\mu$m and most preferably of 0.007 to 1.0 $\mu$m, e.g. 0.004 to 0.16 $\mu$m determined by mercury porosimetry measurement. According to an exemplary embodiment, the surface-reacted calcium carbonate has a volume median particle size $d_{50}$ from 1.5 to 15 $\mu$m, preferably from 4 to 6 $\mu$m; a specific surface-area of from 30 to 140 m$^2$/g, preferably from 30 to 100 m$^2$/g, measured using nitrogen and the BET method; and an intra-particle intruded specific pore volume from 0.2 to 2.0 cm$^3$/g, preferably from 0.6 to 1.6 cm$^3$/g, calculated from mercury porosimetry measurement.

For example, the surface-reacted calcium carbonate is in form of a powder having a volume median particle size $d_{50}$ from 1.5 to 15 $\mu$m, preferably from 4 to 6 $\mu$m; a specific surface-area of from 30 to 140 m$^2$/g, preferably from 30 to 100 m$^2$/g, measured using nitrogen and the BET method; and an intra-particle intruded specific pore volume from 0.2 to 2.0 cm$^3$/g, preferably from 0.6 to 1.6 cm$^3$/g, calculated from mercury porosimetry measurement.

According to one embodiment, the surface-reacted calcium carbonate comprises an water-insoluble, at least partially crystalline calcium salt of an anion of the at least one acid, which is formed on the surface of the natural ground calcium carbonate or precipitated calcium carbonate. According to one embodiment, the water-insoluble, at least partially crystalline salt of an anion of the at least one acid covers the surface of the natural ground calcium carbonate or precipitated calcium carbonate at least partially, preferably completely. Depending on the employed at least one acid, the anion may be sulphate, sulphite, phosphate, citrate, oxalate, acetate, formiate and/or chloride.

For example, the use of phosphoric acid, $H_2PO_4^-$ or $HPO_4^{2-}$ as the $H_3O^+$ ion donor may lead to the formation of hydroxylapatite. Therefore, in a preferred embodiment, the at least one water-insoluble calcium salt is hydroxylapatite.

According to one embodiment, the at least one water-insoluble calcium salt is hydroxylapatite, wherein the surface-reacted calcium carbonate provides a ratio of hydroxylapatite to calcite, aragonite and/or vaterite, preferably to calcite, in the range of from 1:99 to 99:1 by weight. Preferably, the surface-reacted calcium carbonate may provide a ratio of hydroxylapatite to calcite, aragonite and/or vaterite, preferably to calcite, in the range of from 1:9 to 9:1, preferably 1:7 to 8:1, more preferably 1:5 to 7:1 and most preferably 1:4 to 7:1 by weight.

In a similar manner, the use of other $H_3O^+$ ion donors may lead to the formation of corresponding water-insoluble calcium salts other than calcium carbonate on at least part of the surface of the surface-reacted calcium carbonate. In one embodiment, the at least one water-insoluble calcium salt is thus selected from the group consisting of octacalcium phosphate, hydroxylapatite, chlorapatite, fluorapatite, carbonate apatite and mixtures thereof, wherein the surface-reacted calcium carbonate shows a ratio of the at least one water-insoluble calcium salt to calcite, aragonite and/or vaterite, preferably to calcite, in the range of from 1:99 to 99:1, preferably from 1:9 to 9:1, more preferably from 1:7 to 8:1, even more preferably from 1:5 to 7:1 and most preferably from 1:4 to 7:1 by weight.

The surface-reacted calcium carbonate comprises:

(i) a specific surface area of from 15 to 200 $m^2/g$ measured using nitrogen and the BET method according to ISO 9277:2010, and
(ii) an intra-particle intruded specific pore volume in the range of from 0.1 to 2.3 $cm^3/g$ calculated from mercury porosimetry measurement.

It was surprisingly found by the inventors that the surface-reacted calcium carbonate as defined herein stabilizes mint oil. That is to say, at least one compound of the mint oil is stabilized against chemical conversion when the mint oil is being adsorbed onto and/or absorbed into the surface of the surface-reacted calcium carbonate.

Thus, it is one requirement of the present invention that the mint oil is adsorbed onto and/or absorbed into the surface of the surface-reacted calcium carbonate. Preferably, the mint oil is adsorbed onto and/or absorbed into the surface of the surface-reacted calcium carbonate in specific amounts. According to one embodiment, the amount of the mint oil being adsorbed onto and/or absorbed into the surface of the surface-reacted calcium carbonate ranges from 0.1 to 100 wt.-%, based on the weight of the surface-reacted calcium carbonate, preferably ranges from 30 to 100 wt.-%, more preferably from 50 to 100 wt.-%, and most preferably from 70 to 100 wt.-%. For example, the amount of the mint oil being adsorbed onto and/or absorbed into the surface of the surface-reacted calcium carbonate ranges from 80 to 100 wt.-%, based on the weight of the surface-reacted calcium carbonate.

It is appreciated that the mint oil can be any mint oil known and available to the skilled person. However, the mint oil is preferably selected from mint oil, spearmint oil, peppermint oil and mixtures thereof. More preferably the mint oil is spearmint oil or peppermint oil. For example, the mint oil is peppermint oil.

Mint oil is generally characterized in that it comprises a complex mixture of different compounds. Depending on the specific kind of plant, the place where the corresponding plant has been grown and the methods used for obtaining the oil from the plant, the composition of the mint oil may vary.

However, compounds which are typically found in mint oil include menthol, isomenthone, menthone, limonene, menthyl acetate, β-pinene, α-pinene, α-terpineol, isopulegol, terpinen-4-ol, neoisopulegol, pulegone, piperitone and/or caryophyllene.

Thus, it is appreciated that the mint oil being adsorbed onto and/or absorbed into the surface of the surface-reacted calcium carbonate preferably comprises two or more compounds selected from the group comprising menthol, isomenthone, menthone, limonene, menthyl acetate, β-pinene, α-pinene, α-terpineol, isopulegol, terpinen-4-ol, neoisopulegol, pulegone, piperitone and caryophyllene.

In one embodiment, the mint oil being adsorbed onto and/or absorbed into the surface of the surface-reacted calcium carbonate preferably comprises three or more compounds selected from the group comprising menthol, isomenthone, menthone, limonene, menthyl acetate, β-pinene, α-pinene, α-terpineol, isopulegol, terpinen-4-ol, neoisopulegol, pulegone, piperitone and caryophyllene.

In another embodiment, the mint oil being adsorbed onto and/or absorbed into the surface of the surface-reacted calcium carbonate preferably comprises five or more compounds selected from the group comprising menthol, isomenthone, menthone, limonene, menthyl acetate, β-pinene, α-pinene, α-terpineol, isopulegol, terpinen-4-ol, neoisopulegol, pulegone, piperitone and caryophyllene.

For example, the mint oil being adsorbed onto and/or absorbed into the surface of the surface-reacted calcium carbonate preferably comprises all of the compounds selected from menthol, isomenthone, menthone, limonene, menthyl acetate, $\beta$-pinene, $\alpha$-pinene, $\alpha$-terpineol, isopulegol, terpinen-4-ol, neoisopulegol, pulegone, piperitone and caryophyllene.

As already mentioned above, mint oil typically comprises a complex mixture of compounds. Thus, it is not excluded that the mint oil being adsorbed onto and/or absorbed into the surface of the surface-reacted calcium carbonate comprises further compounds differing from menthol, isomenthone, menthone, limonene, menthylacetate, $\beta$-pinene, $\alpha$-pinene, $\alpha$-terpineol, isopulegol, terpinen-4-ol, neoisopulegol, pulegone, piperitone and/or caryophyllene.

However, it is appreciated that, if present, the two or more compounds selected from the group comprising menthol, isomenthone, menthone, limonene, menthyl acetate, $\beta$-pinene, $\alpha$-pinene, $\alpha$-terpineol, isopulegol, terpinen-4-ol, neoisopulegol, pulegone, piperitone and caryophyllene are present in the mint oil in a total amount of at least 80 wt.-%, preferably at least 85 wt.-%, more preferably at least 90 wt.-% and most preferably at least 95 wt.-%, based on the total weight of the mint and as determined by GC-MS.

It was surprisingly found out by the inventors that the surface-reacted calcium carbonate especially stabilizes mint oil.

Thus, the present invention refers in a further aspect to the use of the surface-reacted calcium carbonate for stabilizing mint oil.

"Stabilizing mint oil" in the meaning of the present invention means that at least one compound of the mint oil is stabilized against chemical conversion. That is to say, the change in composition of the mint oil is reduced compared to a mint oil which is not adsorbed onto and/or absorbed into the surface of the surface-reacted calcium carbonate, i.e. the same compounds are detected. Furthermore, the change in the amount of specific compounds present in the mint oil is reduced compared to a mint oil which is not adsorbed onto and/or absorbed into the surface of the surface-reacted calcium carbonate.

It is appreciated that the expression "at least one" compound means that one or more compound(s) of the mint oil is/are stabilized against chemical conversion.

Accordingly, it should be noted that the at least one compound may be one compound. Alternatively, the at least one compound is a mixture of two or more compounds. For example, the at least one compound is a mixture of five or more compounds.

It is appreciated that the at least one compound of the mint oil which is stabilized against chemical conversion is a compound which is typically present in the mint oil, i.e. a compound selected from the group comprising menthol, isomenthone, menthone, limonene, menthyl acetate, $\beta$-pinene, $\alpha$-pinene, $\alpha$-terpineol, isopulegol, terpinen-4-ol, neoisopulegol, pulegone, piperitone and caryophyllene.

It is to be noted that due to their lower stability specific compounds have a higher tendency for chemical conversion and thus feature a lower stability than other compounds being present in the mint oil. Thus, it is preferred that the at least one compound of the mint oil which is stabilized against chemical conversion is a compound selected from $\beta$-pinene, $\alpha$-pinene, limonene, isopulegol, neoisopulegol, pulegone and mixtures thereof.

For example, two or more compounds of the mint oil selected from $\beta$-pinene, $\alpha$-pinene, limonene, isopulegol, neoisopulegol, pulegone and mixtures thereof are stabilized against chemical conversion.

In one embodiment, all of the compounds, i.e. a mixture of, $\beta$-pinene, $\alpha$-pinene, limonene, isopulegol, neoisopulegol and pulegone are stabilized against chemical conversion.

It is appreciated that the stabilization of the mint oil relates to a recovery rate of same within 93 days, preferably 93 days, of $\geq$ 96.0 wt.-%, preferably $\geq$ 97.0 wt.-%, even more preferably $\geq$ 98.0 wt.-%, and most preferably $\geq$ 99.0 wt.-%, as determined by GC-MS after storing the surface-reacted calcium carbonate at room temperature.

Additionally or alternatively, the stabilization of the mint oil relates to a recovery rate of same within 30 days, preferably 30 days, of $\geq$ 99.0 wt.-%, preferably $\geq$ 99.5 wt.-%, as determined by GC-MS after storing the surface-reacted calcium carbonate at room temperature.

**In** one embodiment, the stabilization of the mint oil relates to a recovery rate of same

a) within 93 days, preferably 93 days, of $\geq$ 96.0 wt.-%, preferably $\geq$ 97.0 wt.-%, even more preferably $\geq$ 98.0 wt.-%, and most preferably $\geq$ 99.0 wt.-%, as determined by GC-MS after storing the surface-reacted calcium carbonate at room temperature, and
b) within 30 days, preferably 30 days, of $\geq$ 99.0 wt.-%, preferably $\geq$ 99.5 wt.-%, as determined by GC-MS after storing the surface-reacted calcium carbonate at room temperature.

Additionally or alternatively, the stabilization of the mint oil relates to a recovery rate of same within 93 days, preferably 93 days, of $\geq$ 90.0 wt.-%, preferably $\geq$ 92.0 wt.-%, even more preferably $\geq$ 94.0 wt.-%, and most preferably $\geq$ 96.0 wt.-%, as determined by GC-MS after storing the surface-reacted calcium carbonate at a temperature of 40°C ($\pm$ 2°C).

In one embodiment, the stabilization of the mint oil relates to a recovery rate of same within 30 days, preferably

30 days, of $\geq$ 94.0 wt.-%, preferably $\geq$ 98.0 wt.-%, as determined by GC-MS after storing the surface-reacted calcium carbonate at a temperature of 40°C ($\pm$ 2°C).

For example, the stabilization of the mint oil relates to a recovery rate of same

a) within 93 days, preferably 93 days, of $\geq$ 90.0 wt.-%, preferably $\geq$ 92.0 wt.-%, even more preferably $\geq$ 94.0 wt.-%, and most preferably $\geq$ 96.0 wt.-%, as determined by GC-MS after storing the surface-reacted calcium carbonate at a temperature of 40°C ($\pm$ 2°C), and

b) within 30 days, preferably 30 days, of $\geq$ 94.0 wt.-%, preferably $\geq$ 98.0 wt.-%, as determined by GC-MS after storing the surface-reacted calcium carbonate at a temperature of 40°C ($\pm$ 2°C).

In one embodiment, the stabilization of the mint oil relates to a recovery rate of same

a) within 93 days, preferably 93 days, of $\geq$ 96.0 wt.-%, preferably $\geq$ 97.0 wt.-%, even more preferably $\geq$ 98.0 wt.-%, and most preferably $\geq$ 99.0 wt.-%, as determined by GC-MS after storing the surface-reacted calcium carbonate at room temperature, and

b) within 93 days, preferably 93 days, of $\geq$ 90.0 wt.-%, preferably $\geq$ 92.0 wt.-%, even more preferably $\geq$ 94.0 wt.-%, and most preferably $\geq$ 96.0 wt.-%, as determined by GC-MS after storing the surface-reacted calcium carbonate at a temperature of 40°C ($\pm$ 2°C).

Additionally or alternatively, the stabilization of the mint oil relates to a recovery rate of same

a) within 30 days, preferably 30 days, of $\geq$ 99.0 wt.-%, preferably $\geq$ 99.5 wt.-%, as determined by GC-MS after storing the surface-reacted calcium carbonate at room temperature, and

b) within 30 days, preferably 30 days, of $\geq$ 94.0 wt.-%, preferably $\geq$ 98.0 wt.-%, as determined by GC-MS after storing the surface-reacted calcium carbonate at a temperature of 40°C ($\pm$ 2°C).

In one embodiment, the stabilization of the mint oil relates to a recovery rate of same

a) within 93 days, preferably 93 days, of $\geq$ 96.0 wt.-%, preferably $\geq$ 97.0 wt.-%, even more preferably $\geq$ 98.0 wt.-%, and most preferably $\geq$ 99.0 wt.-%, as determined by GC-MS after storing the surface-reacted calcium carbonate at room temperature,

b) within 30 days, preferably 30 days, of $\geq$ 99.0 wt.-%, preferably $\geq$ 99.5 wt.-%, as determined by GC-MS after storing the surface-reacted calcium carbonate at room temperature,

c) within 93 days, preferably 93 days, of $\geq$ 90.0 wt.-%, preferably $\geq$ 92.0 wt.-%, even more preferably $\geq$ 94.0 wt.-%, and most preferably $\geq$ 96.0 wt.-%, as determined by GC-MS after storing the surface-reacted calcium carbonate at a temperature of 40°C ($\pm$ 2°C), and

d) within 30 days, preferably 30 days, of $\geq$ 94.0 wt.-%, preferably $\geq$ 98.0 wt.-%, as determined by GC-MS after storing the surface-reacted calcium carbonate at a temperature of 40°C ($\pm$ 2°C).

It is to be noted that the recovery rate refers to the amount of all of the compounds selected from menthol, isomenthone, menthone, limonene, menthylacetate, $\beta$-pinene, $\alpha$-pinene, $\alpha$-terpineol, isopulegol, terpinen-4-ol, neoisopulegol, pulegone, piperitone and caryophyllene in the mint oil as determined by GC-MS.

It is appreciated that the surface-reacted calcium carbonate, wherein the mint oil is adsorbed onto and/or absorbed into the surface of the surface-reacted calcium carbonate, has a volume median particle size $d_{50}$ from 0.1 to 90 $\mu$m. According to one embodiment the surface-reacted calcium carbonate, wherein the mint oil is adsorbed onto and/or absorbed into the surface of the surface-reacted calcium carbonate, has a volume median particle size $d_{50}$ from 0.1 to 75 $\mu$m, preferably from 0.5 to 50 $\mu$m, more preferably from 1 to 40 $\mu$m, even more preferably from 1.2 to 30 $\mu$m, and most preferably from 1.5 to 15 $\mu$m.

Preferably, the surface-reacted calcium carbonate, wherein the mint oil is adsorbed onto and/or absorbed into the surface of the surface-reacted calcium carbonate, is in form of a powder having a volume median particle size $d_{50}$ from 0.1 to 90 $\mu$m, more preferably from 0.1 to 75 $\mu$m, even more preferably from 0.5 to 50 $\mu$m, still more preferably from 1 to 40 $\mu$m, even still more preferably from 1.2 to 30 $\mu$m, and most preferably from 1.5 to 15 $\mu$m.

In one embodiment of the present invention, the surface-reacted calcium carbonate, wherein the mint oil is adsorbed onto and/or absorbed into the surface of the surface-reacted calcium carbonate, is provided in the form of granules. "Granules" in the meaning of the present invention are agglomerates of the surface-reacted calcium carbonate and have a particle size of 0.1 to 6 mm. That is to say, the granules having a particle size of 0.1 to 6 mm comprise primary particles of the surface-reacted calcium carbonate having a volume median particle size $d_{50}$ from 0.1 to 90 $\mu$m, preferably from 0.5 to 50 $\mu$m, more preferably from 1 to 40 $\mu$m, even more preferably from 1.2 to 30 $\mu$m, and most

preferably from 1.5 to 15 $\mu$m.

For example, the granules preferably have a volume median particle size of from 0.2 to 5 mm, even more preferably from 0.3 to 4 mm, especially preferably from 0.3 to 0.6 mm or 1 mm to 4 mm, most preferably from 0.6 to 1 mm or 1 to 2 mm determined by sieve fractioning, comprise primary particles of the surface-reacted calcium carbonate having a volume median particle size $d_{50}$ from 0.1 to 90 $\mu$m,

It is appreciated that the stabilizing of the mint oil is advantageously improved if the surface-reacted calcium carbonate, wherein the mint oil is adsorbed onto and/or absorbed into the surface of the surface-reacted calcium carbonate, is in form of a powder.

The use of the surface-reacted calcium carbonate having a volume median particle size $d_{50}$ from 0.1 to 90 $\mu$m, wherein mint oil is adsorbed onto and/or absorbed into the surface of the surface-reacted calcium carbonate according to the invention is not limited to a specific application.

Thus, the surface-reacted calcium carbonate having a volume median particle size $d_{50}$ from 0.1 to 90 $\mu$m, wherein mint oil is adsorbed onto and/or absorbed into the surface of the surface-reacted calcium carbonate according to the invention can be used in the manufacturing of soap, shampoo, skin care products, pharmaceutical products, cigarettes, toothpaste, disinfectants, bug repellants, food products such as chewing gum, sweets and ice cream, drinks such as tea, syrup and concentrates, and the like.

The surface-reacted calcium carbonate having a volume median particle size $d_{50}$ from 0.1 to 90 $\mu$m, wherein mint oil is adsorbed onto and/or absorbed into the surface of the surface-reacted calcium carbonate according to the invention, may be provided in any suitable liquid or dry form. For example, the surface-reacted calcium carbonate may be in form of a powder and/or a suspension. The suspension can be obtained by mixing the surface-reacted calcium carbonate, wherein the mint oil is adsorbed onto and/or absorbed into the surface of the surface-reacted calcium carbonate, with a solvent, preferably water and/or ethanol, e.g. water. The surface-reacted calcium carbonate, wherein the mint oil is adsorbed onto and/or absorbed into the surface of the surface-reacted calcium carbonate, to be mixed with a solvent, and preferably water and/or ethanol, may be provided in any form, for example, as suspension, slurry, dispersion, paste, powder, a moist filter cake or in pressed or granulated form, and preferably is provided as a powder. In one embodiment, the surface-reacted calcium carbonate, wherein the mint oil is adsorbed onto and/or absorbed into the surface of the surface-reacted calcium carbonate, is mixed with water.

The solids content of the suspension, preferably aqueous suspension, of the surface-reacted calcium carbonate may be from 1 to 85 wt.-%, more preferably from 5 to 75 wt.-%, and most preferably from 10 to 40 wt.-%, based on the total weight of the suspension.

In case the surface-reacted calcium carbonate, wherein the mint oil is adsorbed onto and/or absorbed into the surface of the surface-reacted calcium carbonate, is provided in dry form, the moisture content of the surface-reacted calcium carbonate can be between 0.01 and 5 wt.-%, based on the total weight of the surface-reacted calcium carbonate. The moisture content of the surface-reacted calcium carbonate can be, for example, less than or equal to 1.0 wt.-%, based on the total weight of the surface-reacted calcium carbonate, preferably less than or equal to 0.5 wt.-%, and more preferably less than or equal to 0.2 wt.-%. According to another example, the moisture content of the surface-reacted calcium carbonate may be between 0.01 and 0.15 wt.-%, preferably between 0.02 and 0.10 wt.-%, and more preferably between 0.03 and 0.07 wt.-%, based on the total weight of the surface-reacted calcium carbonate.

**Brief description of the Figures**

Fig. 1 shows a chromatogram of pure mint oil.

Fig. 2 shows a comparison of the results of the loaded samples and mint oil stored at room temperature over time.

Fig. 3 shows a comparison of the results of the loaded samples and mint oil stored at 40°C.

Fig. 4 shows a chromatogram after 93 days of storage at 40°C.

The scope and interest of the invention will be better understood based on the following examples which are intended to illustrate certain embodiments of the present invention and are non-limitative.

**Examples**

**1. Measurement methods**

In the following, measurement methods implemented in the examples are described.

**Particle size distribution**

Volume determined median particle size $d_{50}$(vol) and the volume determined top cut particle size $d_{98}$(vol) was evaluated using a Malvern Mastersizer 2000 Laser Diffraction System (Malvern Instruments Plc., Great Britain). The $d_{50}$(vol) or $d_{98}$(vol) value indicates a diameter value such that 50 % or 98 % by volume, respectively, of the particles have a diameter of less than this value. The raw data obtained by the measurement was analyzed using the Mie theory, with a particle refractive index of 1.57 and an absorption index of 0.005. The methods and instruments are known to the skilled person and are commonly used to determine particle size distributions of fillers and pigments.

The weight determined median particle size $d_{50}$(wt) was measured by the sedimentation method, which is an analysis of sedimentation behaviour in a gravimetric field. The measurement was made with a Sedigraph™ 5120 of Micromeritics Instrument Corporation, USA. The method and the instrument are known to the skilled person and are commonly used to determine particle size distributions of fillers and pigments. The measurement was carried out in an aqueous solution of 0.1 wt.-% $Na_4P_2O_7$. The samples were dispersed using a high speed stirrer and supersonicated.

**Specific surface area (SSA)**

The specific surface area was measured via the BET method according to ISO 9277 using nitrogen, following conditioning of the sample by heating at 250°C for a period of 30 minutes. Prior to such measurements, the sample was filtered within a Büchner funnel, rinsed with deionised water and dried overnight at 90 to 100°C in an oven. Subsequently, the dry cake was ground thoroughly in a mortar and the resulting powder was placed in a moisture balance at 130°C until a constant weight was reached.

**Intra-particle intruded specific pore volume (in $cm^3/g$)**

The specific pore volume was measured using a mercury intrusion porosimetry measurement using a Micromeritics Autopore V 9620 mercury porosimeter having a maximum applied pressure of mercury 414 MPa (60 000 psi), equivalent to a Laplace throat diameter of 0.004 $\mu$m (~ nm). The equilibration time used at each pressure step was 20 seconds. The sample material was sealed in a 5 $cm^3$ chamber powder penetrometer for analysis. The data were corrected for mercury compression, penetrometer expansion and sample material compression using the software Pore-Comp (Gane, P.A.C., Kettle, J.P., Matthews, G.P. and Ridgway, C.J., "Void Space Structure of Compressible Polymer Spheres and Consolidated Calcium Carbonate Paper-Coating Formulations", Industrial and Engineering Chemistry Research, 35(5), 1996, p1753-1764.).

The total pore volume seen in the cumulative intrusion data can be separated into two regions with the intrusion data from 214 $\mu$m down to about 1 - 4 $\mu$m showing the coarse packing of the sample between any agglomerate structures contributing strongly. Below these diameters lies the fine inter-particle packing of the particles themselves. If they also have intra-particle pores, then this region appears bi-modal, and by taking the specific pore volume intruded by mercury into pores finer than the modal turning point, i.e. finer than the bi-modal point of inflection, the specific intraparticle pore volume is defined. The sum of these three regions gives the total overall pore volume of the powder, but depends strongly on the original sample compaction/settling of the powder at the coarse pore end of the distribution.

By taking the first derivative of the cumulative intrusion curve the pore size distributions based on equivalent Laplace diameter, inevitably including poreshielding, are revealed. The differential curves clearly show the coarse agglomerate pore structure region, the inter-particle pore region and the intra-particle pore region, if present. Knowing the intra-particle pore diameter range it is possible to subtract the remainder inter-particle and inter-agglomerate pore volume from the total pore volume to deliver the desired pore volume of the internal pores alone in terms of the pore volume per unit mass (specific pore volume). The same principle of subtraction, of course, applies for isolating any of the other pore size regions of interest.

**Loose Bulk density**

120 g of the respective carrier material were sieved through a 0.5 mm screen by means of a brush. 100 $\pm$ 0.5 g of this sample were carefully filled through a powder funnel into the 250 mL measuring cylinder and the volume was read off to the nearest 1 mL. The loose bulk density was the calculated according the formula:

$$\text{Loose bulk density [g/mL]} = \text{bulk volume [mL]/weighed sample [g]}$$

and the result was recorded to the nearest 0.01 g/mL.

## 2. Carrier materials

The carrier materials set out in table 1 have been used for the present invention.

Table 1: Specification of carrier materials

| Carrier material | Particle size ($d_{50}$) | Surface Area (BET) | Bulk Density | Intra Particle Specific Pore Volume |
|---|---|---|---|---|
| | $\mu m$ | $m^2/g$ | g/ml | $cm^3/g$ |
| SRCC powder | 7.68 | 56.8 | 0.18 | 0.807 (for pore diameter range of 0.004 to 0.47 $\mu m$) |
| SRCC granules | 560 | 52 | 0.47 | 0.897 (for pore diameter range of 0.004 to 4.9 $\mu m$) |
| Silica granules | 248 | 118 | 0.25 | 1.899 (for pore diameter range of 0.004 to 4.0 $\mu m$) |

SRCC powder was obtained by preparing 350 litres of an aqueous suspension of ground calcium carbonate in a mixing vessel by adjusting the solids content of a ground limestone calcium carbonate from Omya SAS, Orgon having a weight-based median particle size of 1.3 $\mu m$, as determined by sedimentation, such that a solids content of 10 wt.-%, based on the total weight of the aqueous suspension, was obtained.

Whilst mixing the slurry at a speed of 6.2 m/s, 11.2 kg phosphoric acid were added in form of an aqueous solution containing 30 wt.-% phosphoric acid to said suspension over a period of 20 minutes at a temperature of 70 °C. After the addition of the acid, the slurry was stirred for additional 5 minutes, before removing it from the vessel and drying using a j et-dryer.

### a) Granulation of surface reacted calcium carbonate (SRCC)

The SRCC powder obtained above was compacted in a Fitzpatrick roller compactor CCS220. The conditions for the dry granulation were roll speed 8 rpm, roll force 5 kN/cm, roll gap 0.9 mm (set 0.6 mm), vertical screw speed 250 rpm, horizontal screw speed 25 rpm (set to 30 rpm), mill speed 500 rpm (perforated 1 mm screen with knife rotor).

The outcome of the dry granulation was sieved through 90, 180, 250, 355, 500, 710 $\mu m$ sieves in a Retsch tower sieve AS300 with a 1.00 mm amplitude with 10 sec. interval, for 3 minutes. The 0-90 and 90-180 $\mu m$ fractions were emptied and all fractions re-sieved at the same conditions for another 6 minutes. The sieving was done in 300g steps.

The Fraction 90 $\mu m$ to 710 $\mu m$ was used in the experiments.

### b) Loading of Mint oil on Powder and Granules

The mint oil was obtained from FREY & LAU ("Minzöl EuAB"; Product number P01422029).

The loading of mint oil on powder and granules (also mentioned as granulates) was done on plough shear mixer from Loedige. Mint oil was poured on the powder or granules with help of an Isotech peristaltic pump, the addition rate appx 10 gram/min.

The plough of the mixer was rotated at rate of 250 rpm and the chopper was on at all time to avoid clumps while loading of powder or granules with the oil.

85 grams of mint oil were loaded on 100 grams of each carrier material set out in table 1 above. Silica granules were used instead of silica powder due to the teaching of US patent 4,603,143 that discloses that substances are more chemically stable on silica granules compared to fine silica powder.

### c) Analysis of chemical stability of mint oil

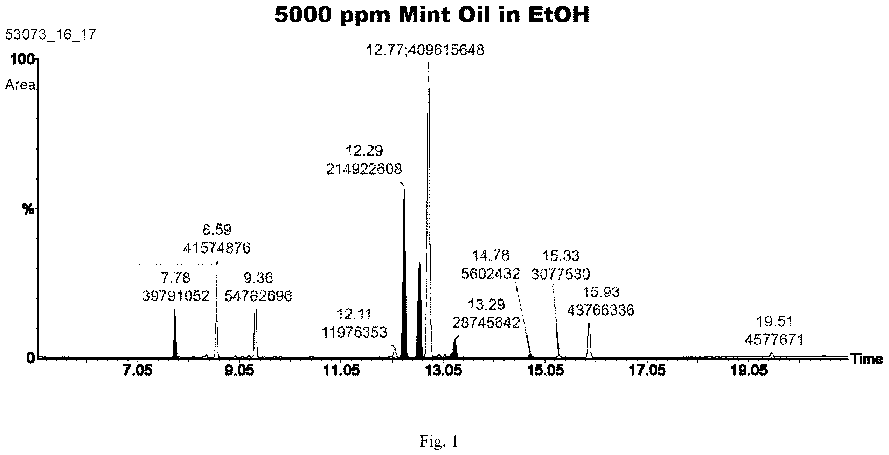

The samples loaded with mint oil were extracted and analyzed right after the loading (day 0) and after 30 and 93 days. Pure mint oil was analyzed (without extraction) with all the samples (SRCC powder, SRCC granules, and silica granules) to evaluate the change in time of the mint oil itself. One set of samples was stored at room temperature and the other one at 40°C ($\pm$ 2°C) all in air tight glass jars. Some of pure mint oil from day 0 was stored in the refrigerator (in a glass jar) to produce the calibrations on each analyzing day. Pure mint oil was analyzed with GC-MS and a base line chromatogram was obtained (see Fig. 1). Based on the area of peaks the amount of specific components of mint oil was determined as described in table 2.

Table 2: Substances contained in mint oil (see also Fig. 1)

|  | Substance | CAS | GC- Area% |
|---|---|---|---|
| Peak at Rt 7.8 min | $\alpha$-Pinene | 7785-26-4 | 3.90% |
| Peak at Rt 8.6 min | $\beta$-Pinene | 18172-67-3 | 4.10% |
| Peak at Rt 9.4 min | Limonene | 138-86-3 | 5.40% |
| Peak at Rt 12.1 min | Isopulegol | 89-79-2 | 1.10% |
| Peak at Rt 12.3 min | Isomenthone | 491-07-6 | 21.20% |
| Peak at Rt 12.6 min | Menthone | 89-80-5 | 14.40% |
| Peak at Rt 12.8 min | Menthol | 2216-51-5 | 40.50% |
| Peak at Rt 13.0 min | Terpinen-4-ol | 562-74-3 | 0.40% |
| Peak at Rt 13.1 min | Neoisopulegol | 29141-10-4 | 0.30% |
| Peak at Rt 13.3 min | $\alpha$-Terpineol | 98-55-5 | 2.90% |
| Peak at Rt 14.8 min | Pulegone | 89-82-7 | 0.60% |
| Peak at Rt 15.3 min | Piperitone | 89-81-6 | 0.30% |
| Peak at Rt 15.9 min | Menthylacetate | 89-48-5 | 4.30% |
| Peak at Rt 19.5 min | Caryophyllene | 87-44-5 | 0.50% |

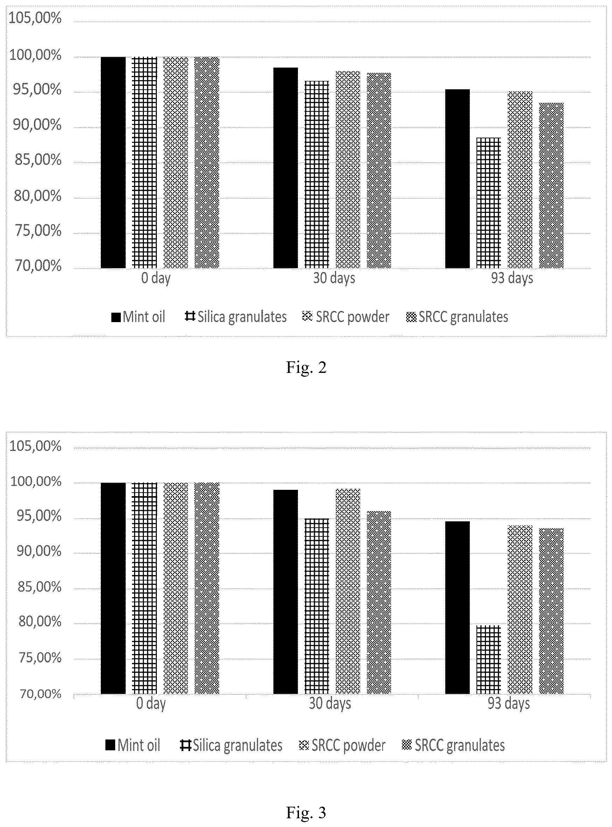

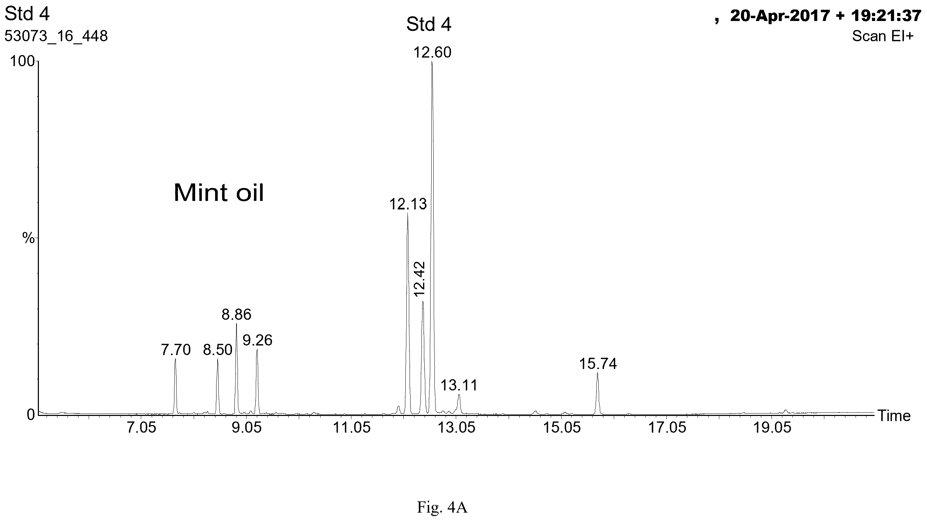

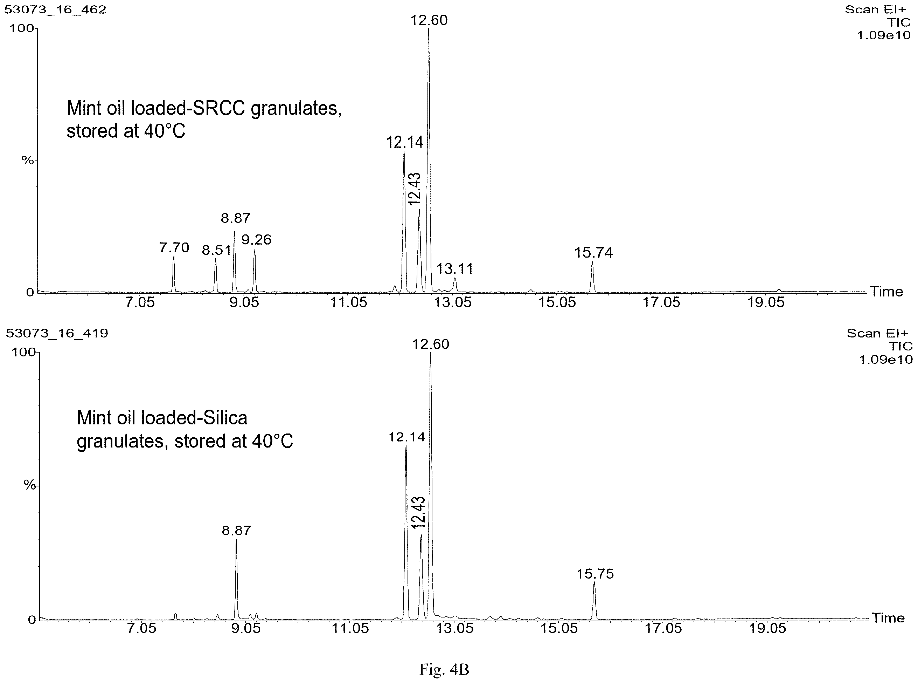

Mint oil was extracted from the carrier materials after the storage (at room temperature or at 40°C) for 30 days and 93 days, respectively. Gas chromatography was used to analyze the composition of mint oil after storage (see Fig. 2 and 3). The composition of mint oil has been slightly changing over time in the sample with silicate granules. The first three peaks were smaller and new small peaks were detected between 13 and 15 min (see Fig. 4). The amount of mint oil in these samples decreased slightly over time. There was no change in the composition of the mint oil in the samples with SRCC (powder and granules). The GC-MS chromatograms were still very similar to the ones of the standards (see Fig. 4). The amount of mint oil in the SRCC samples stayed constant.

## Claims

1.   A surface-reacted calcium carbonate having a volume median particle size $d_{50}$ from 0.1 to 90 $\mu$m, wherein mint oil is adsorbed onto and/or absorbed into the surface of the surface-reacted calcium carbonate,

wherein the surface-reacted calcium carbonate is a reaction product of natural ground calcium carbonate or precipitated calcium carbonate with carbon dioxide and one or more $H_3O^+$ ion donors, wherein the carbon dioxide is formed in situ by the $H_3O^+$ ion donors treatment and/or is supplied from an external source, wherein the surface-reacted calcium carbonate has a specific surface area of from 15 $m^2$/g to 200 $m^2$/g, measured using nitrogen and the BET method, and an intraparticle intruded specific pore volume in the range of from 0.1 to 2.3 $cm^3$/g calculated from mercury porosimetry measurement.

2.   The surface-reacted calcium carbonate of claim 1, wherein the surface-reacted calcium carbonate has a volume median particle size $d_{50}$ from 0.5 to 50 $\mu$m, preferably from 1 to 40 $\mu$m, more preferably from 1.2 to 30 $\mu$m, and most preferably from 1.5 to 15 $\mu$m.

3.   The surface-reacted calcium carbonate of claim 1 or 2, wherein the surface-reacted calcium carbonate has a specific surface area of from 20 $m^2$/g to 180 $m^2$/g, and more preferably from 25 $m^2$/g to 160 $m^2$/g, measured using nitrogen and the BET method.

4. The surface-reacted calcium carbonate according to any one of claims 1 to 3, wherein

the natural ground calcium carbonate is selected from the group consisting of marble, chalk, limestone, and mixtures thereof, or
the precipitated calcium carbonate is selected from the group consisting of precipitated calcium carbonates having an aragonitic, vateritic or calcitic crystal form, and mixtures thereof.

5. The surface-reacted calcium carbonate according to any one of claims 1 to 4, wherein the at least one $H_3O^+$ ion donor is selected from the group consisting of hydrochloric acid, sulphuric acid, sulphurous acid, phosphoric acid, citric acid, oxalic acid, an acidic salt, acetic acid, formic acid, and mixtures thereof, preferably the at least one $H_3O^+$ ion donor is selected from the group consisting of hydrochloric acid, sulphuric acid, sulphurous acid, phosphoric acid, oxalic acid, $H_2PO_4^-$, being at least partially neutralised by a cation selected from $Li^+$, $Na^+$ and/or $K^+$, $HPO_4^{2-}$, being at least partially neutralised by a cation selected from $Li^+$, $Na^+$, $K^+$, $Mg^{2+}$, and/or $Ca^{2+}$, and mixtures thereof, more preferably the at least one $H_3O^+$ ion donor is selected from the group consisting of hydrochloric acid, sulphuric acid, sulphurous acid, phosphoric acid, oxalic acid, or mixtures thereof, and most preferably, the at least one $H_3O^+$ ion donor is phosphoric acid.

6. The surface-reacted calcium carbonate according to any of claims 1 to 5, wherein the surface-reacted calcium carbonate is in form of a powder.

7. The surface-reacted calcium carbonate according to any one of claims 1 to 5, wherein the surface-reacted calcium carbonate is in form of granules, preferably granules having a volume median particle size of from 0.1 to 6 mm, preferably 0.2 to 5 mm, more preferably from 0.3 to 4 mm, especially preferably from 0.3 to 0.6 mm or 1 mm to 4 mm, most preferably from 0.6 to 1 mm or 1 to 2 mm determined by sieve fractioning.

8. The surface-reacted calcium carbonate according to any one of claims 1 to 7, wherein the mint oil comprises two or more compounds selected from the group comprising menthol, isomenthone, menthone, limonene, menthylacetate, β-pinene, α-pinene, α-terpineol, isopulegol, terpinen-4-ol, neoisopulegol, pulegone, piperitone and caryophyllene.

9. The surface-reacted calcium carbonate according to any one of claims 1 to 8, wherein the mint oil is selected from mint oil, spearmint oil, peppermint oil and mixtures thereof.

10. Use of a surface-reacted calcium carbonate as defined in any one of claims 1 to 9 for stabilizing mint oil, wherein at least one compound of the mint oil is stabilized against chemical conversion and/or the stabilization of the mint oil relates to a recovery rate of same within 93 days of ≥ 96.0 wt.-%, as determined by GC-MS after storing the surface-reacted calcium carbonate at room temperature.

11. The use according to claim 10, wherein the at least one compound is selected from β-pinene, α-pinene, limonene, isopulegol, neoisopulegol, pulegone and mixtures thereof.

12. The use according to claim 10 or 11, wherein the stabilization of the mint oil relates to a recovery rate of same within 93 days of ≥ 97.0 wt.-%, even more preferably ≥ 98.0 wt.-%, and most preferably ≥ 99.0 wt.-%, as determined by GC-MS after storing the surface-reacted calcium carbonate at room temperature.

13. The use according to claim 12, wherein the stabilization of the mint oil relates to a recovery rate of same at 93 days of ≥ 96.0 wt.-%, preferably ≥ 97.0 wt.-%, even more preferably ≥ 98.0 wt.-%, and most preferably ≥ 99.0 wt.-%, as determined by GC-MS after storing the surface-reacted calcium carbonate at room temperature.

14. The use according to any one of claims 10 to 13, wherein the stabilization of the mint oil relates to a recovery rate of same within 30 days, preferably 30 days, of ≥ 99.0 wt.-%, preferably ≥ 99.5 wt.-%, as determined by GC-MS after storing the surface-reacted calcium carbonate at room temperature.

15. The use according to any one of claims 10 to 14, wherein the stabilization of the mint oil relates to a recovery rate of same within 93 days, preferably 93 days, of ≥ 90.0 wt.-%, preferably ≥ 92.0 wt.-%, even more preferably ≥ 94.0 wt.-%, and most preferably ≥ 96.0 wt.-%, as determined by GC-MS after storing the surface-reacted calcium carbonate at a temperature of 40°C ($\pm$ 2°C).

16. The use according to any one of claims 10 to 15, wherein the stabilization of the mint oil relates to a recovery rate of same within 30 days, preferably 30 days, of $\geq$ 94.0 wt.-%, preferably $\geq$ 98.0 wt.-%, as determined by GC-MS after storing the surface-reacted calcium carbonate at a temperature of 40°C ($\pm$ 2°C).

**Patentansprüche**

1. Oberflächenreagiertes Calciumcarbonat mit einer volumenmittleren Partikelgröße $d_{50}$ von 0,1 bis 90 $\mu$m, wobei Minzöl auf die Oberfläche des oberflächenreagierten Calciumcarbonats adsorbiert und/oder in diese absorbiert ist,

   wobei das oberflächenreagierte Calciumcarbonat ein Reaktionsprodukt von natürlichem gemahlenem Calciumcarbonat oder gefälltem Calciumcarbonat mit Kohlendioxid und einem oder mehreren $H_3O^+$-Ionendonatoren ist, wobei das Kohlendioxid in situ durch die Behandlung mit den $H_3O^+$-Ionendonatoren gebildet und/oder aus einer externen Quelle bereitgestellt wird,
   wobei das oberflächenreagierte Calciumcarbonat eine spezifische Oberfläche von 15 m2/g bis 200 m2/g, unter Verwendung von Stickstoff und dem BET-Verfahren gemessen, und ein intrapartikuläres intrudiertes spezifisches Porenvolumen im Bereich von 0,1 bis 2,3 cm3/g, anhand Quecksilberporosimetrie-Messung berechnet, aufweist.

2. Oberflächenreagiertes Calciumcarbonat nach Anspruch 1, wobei das oberflächenreagierte Calciumcarbonat eine volumenmittlere Partikelgröße $d_{50}$ von 0,5 bis 50 $\mu$m, bevorzugt von 1 bis 40 $\mu$m, bevorzugter von 1,2 bis 30 $\mu$m, und besonders bevorzugt von 1,5 bis 15 $\mu$m aufweist.

3. Oberflächenreagiertes Calciumcarbonat nach Anspruch 1 oder 2, wobei das oberflächenreagierte Calciumcarbonat eine spezifische Oberfläche von 20 m2/g bis 180 m2/g, und bevorzugter von 25 m2/g bis 160 m2/g, unter Verwendung von Stickstoff und dem BET-Verfahren gemessen, aufweist.

4. Oberflächenreagiertes Calciumcarbonat nach einem der Ansprüche 1 bis 3, wobei

   das natürliche gemahlene Calciumcarbonat ausgewählt ist aus der Gruppe bestehend aus Marmor, Kalk, Kalkstein, und Mischungen davon, oder
   das gefällte Calciumcarbonat ausgewählt ist aus der Gruppe bestehend aus gefällten Calciumcarbonaten mit einer aragonitischen, vateritischen oder calcitischen Kristallform, und Mischungen davon.

5. Oberflächenreagiertes Calciumcarbonat nach einem der Ansprüche 1 bis 4, wobei der mindestens eine $H_3O^+$-Ionendonator ausgewählt ist aus der Gruppe bestehend aus Salzsäure, Schwefelsäure, schwefliger Säure, Phosphorsäure, Zitronensäure, Oxalsäure, einem sauren Salz, Essigsäure, Ameisensäure, und Mischungen davon, bevorzugt der mindestens eine $H_3O^+$-Ionendonator ausgewählt ist aus der Gruppe bestehend aus Salzsäure, Schwefelsäure, schwefliger Säure, Phosphorsäure, Oxalsäure, $H_2PO_4$., das mindestens teilweise durch ein Kation, ausgewählt aus Li$^+$, Na$^+$ und/oder K$^+$, neutralisiert ist, HPOa$^{2-}$, das mindestens teilweise durch ein Kation, ausgewählt aus Li$^+$, Na$^+$, K$^+$, Mg$^{2+}$, und/oder Ca$^{2+}$, neutralisiert ist, und Mischungen davon, bevorzugter der mindestens eine $H_3O^+$-Ionendonator ausgewählt ist aus der Gruppe bestehend aus Salzsäure, Schwefelsäure, schwefliger Säure, Phosphorsäure, Oxalsäure, oder Mischungen davon, und besonders bevorzugt der mindestens eine $H_3O^+$-Ionendonator Phosphorsäure ist.

6. Oberflächenreagiertes Calciumcarbonat nach einem der Ansprüche 1 bis 5, wobei das oberflächenreagierte Calciumcarbonat in Form eines Pulvers vorliegt.

7. Oberflächenreagiertes Calciumcarbonat nach einem der Ansprüche 1 bis 5, wobei das oberflächenreagierte Calciumcarbonat in Form von Granulaten, bevorzugt Granulaten mit einer volumenmittleren Partikelgröße von 0,1 bis 6 mm, bevorzugt 0,2 bis 5 mm, bevorzugter von 0,3 bis 4 mm, insbesondere bevorzugt von 0,3 bis 0,6 mm oder 1 mm bis 4 mm, besonders bevorzugt von 0,6 bis 1 mm oder 1 bis 2 mm, mittels Siebfraktionierung bestimmt, vorliegt.

8. Oberflächenreagiertes Calciumcarbonat nach einem der Ansprüche 1 bis 7, wobei das Minzöl zwei oder mehr Verbindungen umfasst, ausgewählt aus der Gruppe umfassend Menthol, Isomenthon, Menthon, Limonen, Menthylacetat, $\beta$-Pinen, $\alpha$-Pinen, $\alpha$-Terpineol, Isopulegol, Terpinen-4-ol, Neoisopulegol, Pulegon, Piperiton und Caryophyllen.

9. Oberflächenreagiertes Calciumcarbonat nach einem der Ansprüche 1 bis 8, wobei das Minzöl ausgewählt ist aus Minzöl, Grüne-Minze-Öl, Pfefferminzöl und Mischungen davon.

10. Verwendung eines oberflächenreagierten Calciumcarbonats wie in einem der Ansprüche 1 bis 9 definiert, zum Stabilisieren von Minzöl, wobei mindestens eine Verbindung des Minzöls gegen chemische Umwandlung stabilisiert wird und/oder sich die Stabilisierung des Minzöls auf eine Rückgewinnungsrate desselben binnen 93 Tagen von ≥ 96,0 Gew.-%, wie mittels GC-MS nach Lagerung des oberflächenreagierten Calciumcarbonats bei Raumtemperatur bestimmt, bezieht.

11. Verwendung nach Anspruch 10, wobei die mindestens eine Verbindung ausgewählt ist aus β-Pinen, α-Pinen, Limonen, Isopulegol, Neoisopulegol, Pulegon, und Mischungen davon.

12. Verwendung nach Anspruch 10 oder 11, wobei sich die Stabilisierung des Minzöls auf eine Rückgewinnungsrate desselben binnen 93 Tagen von ≥ 97,0 Gew.-%, noch bevorzugter ≥ 98,0 Gew.-%, und besonders bevorzugt ≥ 99,0 Gew.-%, wie mittels GC-MS nach Lagerung des oberflächenreagierten Calciumcarbonats bei Raumtemperatur bestimmt, bezieht.

13. Verwendung nach Anspruch 12, wobei sich die Stabilisierung des Minzöls auf eine Rückgewinnungsrate desselben nach 93 Tagen von ≥ 96,0 Gew.-%, bevorzugt ≥ 97,0 Gew.-%, noch bevorzugter ≥ 98,0 Gew.-%, und besonders bevorzugt ≥ 99,0 Gew.- %, wie mittels GC-MS nach Lagerung des oberflächenreagierten Calciumcarbonats bei Raumtemperatur bestimmt, bezieht.

14. Verwendung nach einem der Ansprüche 10 bis 13, wobei sich die Stabilisierung des Minzöls auf eine Rückgewinnungsrate desselben binnen 30 Tagen, bevorzugt 30 Tagen, von ≥ 99,0 Gew.-%, bevorzugt ≥ 99,5 Gew.-%, wie mittels GC-MS nach Lagerung des oberflächenreagierten Calciumcarbonats bei Raumtemperatur bestimmt, bezieht.

15. Verwendung nach einem der Ansprüche 10 bis 14, wobei sich die Stabilisierung des Minzöls auf eine Rückgewinnungsrate desselben binnen 93 Tagen, bevorzugt 93 Tagen, von ≥ 90,0 Gew.-%, bevorzugt ≥ 92,0 Gew.-%, noch bevorzugter ≥ 94,0 Gew.- %, und besonders bevorzugt ≥ 96,0 Gew.-%, wie mittels GC-MS nach Lagerung des oberflächenreagierten Calciumcarbonats bei einer Temperatur von 40 °C (± 2°C) bestimmt, bezieht.

16. Verwendung nach einem der Ansprüche 10 bis 15, wobei sich die Stabilisierung des Minzöls auf eine Rückgewinnungsrate desselben binnen 30 Tagen, bevorzugt 30 Tagen, von ≥ 94,0 Gew.-%, bevorzugt ≥ 98,0 Gew.-%, wie mittels GC-MS nach Lagerung des oberflächenreagierten Calciumcarbonats bei einer Temperatur von 40 °C (± 2 °C) bestimmt, bezieht.

**Revendications**

1. Carbonate de calcium ayant réagi en surface présentant une taille moyenne de particules en volume $d_{50}$ allant de 0,1 à 90 μm, dans lequel de l'huile de menthe est adsorbée sur et/ou absorbée à la surface du carbonate de calcium ayant réagi en surface,

   dans lequel la carbonate de calcium ayant réagi en surface est un produit de réaction du carbonate de calcium naturel broyé ou du carbonate de calcium précipité avec du dioxyde de carbone et un ou plusieurs donneurs d'ions $H_3O^+$, dans lequel le dioxyde de carbone est formé in situ par le traitement par donneurs d'ions $H_3O^+$ et/ou est fourni par une source externe,
   dans lequel le carbonate de calcium ayant réagi en surface présente une zone superficielle spécifique allant de 15 m²/g à 200 m²/g, mesurée à l'aide d'azote et du procédé BET, et un volume spécifique de pores pénétré intra-particulaire situé dans la plage allant de 0,1 à 2,3 cm³/g calculé à partir de la mesure par porosimétrie au mercure.

2. Carbonate de calcium ayant réagi en surface selon la revendication 1, dans lequel le carbonate de calcium ayant réagi en surface présente une taille moyenne de particules en volume $d_{50}$ allant de 0,5 à 50 μm, de préférence de 1 à 40 μm, plus préférentiellement de 1,2 à 30 μm, et le plus préférentiellement de 1,5 à 15 μm.

3. Carbonate de calcium ayant réagi en surface selon la revendication 1 ou 2, dans lequel le carbonate de calcium ayant réagi en surface présente une zone superficielle spécifique allant de 20 $m^2$/g à 180 $m^2$/g, et plus préférentiellement de 25 $m^2$/g à 160 $m^2$/g, mesurée à l'aide d'azote et du procédé BET.

4. Carbonate de calcium ayant réagi en surface selon l'une quelconque des revendications 1 à 3, dans lequel

   le carbonate de calcium naturel broyé est choisi parmi le groupe consistant en marbre, craie, calcaire, et des mélanges de ceux-ci, ou
   le carbonate de calcium précipité est choisi parmi le groupe consistant en carbonates de calcium précipités présentant une forme cristalline aragonitique, vatéritique ou calcitique, et des mélanges de ceux-ci.

5. Carbonate de calcium ayant réagi en surface selon l'une quelconque des revendications 1 à 4, dans lequel le au moins un donneur d'ions $H_3O^+$ est choisi parmi le groupe consistant en acide chlorhydrique, acide sulfurique, acide sulfureux, acide phosphorique, acide citrique, acide oxalique, un sel acide, acide acétique, acide formique, et des mélanges de ceux-ci, de préférence le au moins un donneur d'ions $H_3O^+$ est choisi parmi le groupe consistant en acide chlorhydrique, acide sulfurique, acide sulfureux, acide phosphorique, acide oxalique, $H_2PO_4^-$, étant au moins partiellement neutralisé par un cation choisi parmi $Li^+$, $Na^+$ et/ou $K^+$, $HPO_4^{2-}$, étant au moins partiellement neutralisé par un cation choisi parmi $Li^+$, $Na^+$, $K^+$, $Mg^{2+}$, et/ou $Ca^{2+}$, et des mélanges de ceux-ci, plus préférentiellement le au moins un donneur d'ions $H_3O^+$ est choisi parmi le groupe consistant en acide chlorhydrique, acide sulfurique, acide sulfureux, acide phosphorique, acide oxalique, ou des mélanges de ceux-ci, et le plus préférentiellement, le au moins un donneur d'ions $H_3O^+$ est l'acide phosphorique.

6. Carbonate de calcium ayant réagi en surface selon l'une quelconque des revendications 1 à 5, dans lequel le carbonate de calcium ayant réagi en surface se présente sous la forme d'une poudre.

7. Carbonate de calcium ayant réagi en surface selon l'une quelconque des revendications 1 à 5, dans lequel le carbonate de calcium ayant réagi en surface se présente sous la forme de granulés, de préférence des granulés présentant une taille moyenne de particules en volume allant de 0,1 à 6 mm, de préférence de 0,2 à 5 mm, plus préférentiellement de 0,3 à 4 mm, de manière particulièrement préférée de 0,3 à 0,6 mm ou de 1 mm à 4 mm, le plus préférentiellement de 0,6 à 1 mm ou de 1 à 2 mm déterminée par fractionnement au tamis.

8. Carbonate de calcium ayant réagi en surface selon l'une quelconque des revendications 1 à 7, dans lequel l'huile de menthe comprend deux ou plusieurs composés choisis parmi le groupe comprenant le menthol, l'isomenthone, la menthone, le limonène, l'acétate de méthyle, le β-pinène, l'a-pinène, l'a-terpinéol, l'isopulégol, le terpinèn-4-ol, le néo-isopulégol, le pulégone, le pipéritone et le caryophyllène.

9. Carbonate de calcium ayant réagi en surface selon l'une quelconque des revendications 1 à 8, dans lequel l'huile de menthe est choisie parmi l'huile de menthe, l'huile de menthe verte, l'huile de menthe poivrée et de mélanges de celles-ci.

10. Utilisation d'un carbonate de calcium ayant réagi en surface tel que défini selon l'une quelconque des revendications 1 à 9 pour stabiliser l'huile de menthe, dans laquelle au moins un composé de l'huile de menthe est stabilisé contre la conversion chimique et/ou la stabilisation de l'huile de menthe se rapporte à un taux de récupération de celle-ci dans les 93 jours ≥ 96,0 % en poids, tel que déterminé par la CPG-SM après la conservation du carbonate de calcium ayant réagi en surface à température ambiante.

11. Utilisation selon la revendication 10, dans laquelle le au moins un composé est choisi parmi le β-pinène, l'a-pinène, le limonène, l'isopulégol, le néo-isopulégol, le pulégone et des mélanges de ceux-ci.

12. Utilisation selon la revendication 10 ou 11, dans laquelle la stabilisation de l'huile de menthe se rapporte à un taux de récupération de celle-ci dans les 93 jours ≥ 97,0 % en poids, encore plus préférentiellement ≥ 98,0 % en poids, et le plus préférentiellement ≥ 99,0 % en poids, tel que déterminé par la CPG-SM après la conservation du carbonate de calcium ayant réagi en surface à température ambiante.

13. Utilisation selon la revendication 12, dans laquelle la stabilisation de l'huile de menthe se rapporte à un taux de récupération de celle-ci à 93 jours ≥ 96,0 % en poids, de préférence ≥ 97,0 % en poids, encore plus préférentiellement ≥ 98,0 % en poids, et le plus préférentiellement ≥ 99,0 % en poids, tel que déterminé par la CPG-SM après la conservation du carbonate de calcium ayant réagi en surface à température ambiante.

**14.** Utilisation selon l'une quelconque des revendications 10 à 13, dans laquelle la stabilisation de l'huile de menthe se rapporte à un taux de récupération de celle-ci dans les 30 jours, de préférence 30 jours, $\geq$ 99,0 % en poids, de préférence $\geq$ 99,5 % en poids, tel que déterminé par la CPG-SM après la conservation du carbonate de calcium ayant réagi en surface à température ambiante.

**15.** Utilisation selon l'une quelconque des revendications 10 à 14, dans laquelle la stabilisation de l'huile de menthe se rapporte à un taux de récupération de celle-ci dans les 93 jours, de préférence 93 jours, $\geq$ 90,0 % en poids, de préférence $\geq$ 92,0 % en poids, encore plus préférentiellement $\geq$ 94,0 % en poids, et le plus préférentiellement $\geq$ 96,0 % en poids, tel que déterminé par la CPG-SM après la conservation du carbonate de calcium ayant réagi en surface à une température de 40 °C ($\pm$ 2 °C).

**16.** Utilisation selon l'une quelconque des revendications 10 à 15, dans laquelle la stabilisation de l'huile de menthe se rapporte à un taux de récupération de celle-ci dans les 30 jours, de préférence 30 jours, $\geq$ 94,0 % en poids, de préférence $\geq$ 98,0 % en poids, tel que déterminé par la CPG-SM après la conservation du carbonate de calcium ayant réagi en surface à une température de 40 °C ($\pm$ 2 °C).

**5000 ppm Mint Oil in EtOH**

Fig. 1

EP 3 820 945 B1

Fig. 2

Fig. 3

Fig. 4A

Fig. 4B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014057038 A1
- WO 2017093437 A1
- US 4440790 A
- EP 2447213 A1
- EP 2524898 A1
- EP 2371766 A1
- EP 1712597 A1
- EP 1712523 A1
- WO 2013142473 A1

- WO 0039222 A1
- WO 2004083316 A1
- WO 2005121257 A2
- WO 2009074492 A1
- EP 2264108 A1
- EP 2264109 A1
- US 20040020410 A1
- US 4603143 A

**Non-patent literature cited in the description**

- **GANE, P.A.C. ; KETTLE, J.P. ; MATTHEWS, G.P. ; RIDGWAY, C.J.** Void Space Structure of Compressible Polymer Spheres and Consolidated Calcium Carbonate Paper-Coating Formulations. *Industrial and Engineering Chemistry Research,* 1996, vol. 35 (5), 1753-1764